# EUROPEAN PATENT APPLICATION

(11) **EP 2 328 058 A2**
(43) Date of publication of application: **01.06.2011**
(21) Application number: 10192698.8
(22) Date of filing: 26.11.2010
(51) Int. Cl.: G06F 1/16

(54) **Method and apparatus for a user interface**

(30) Priority: 30.11.2009 US 627603
(71) Applicant: Nokia Corporation, 02150 Espoo (FI)
(72) Inventor: Renwick, James, Santa Monica, CA 90403 (US)
(74) Representative: Nokia Corporation

(57) **Abstract**

In accordance with an example embodiment of the present invention, an apparatus comprises a first body part, a second body part, and at least one hinge coupling said first body part with said second body part, said at least one hinge enabling relative rotational movement of said first body part and said second body part with respect to each other between at least one closed configuration and at least one open configuration, said apparatus having a tablet configuration such that said at least one hinge is retractable into at least one of said first body part and said second body part while in said at least one open configuration.

## Description

### TECHNICAL FIELD

The present application relates generally to a method and apparatus for a user interface.

### BACKGROUND

[Electronic devices such as a laptop computer, a personal digital assistant (PDA), or a mobile phone may generally comprise two portions, a top housing and bottom housing, which are coupled with at least one hinge. A conventional pin hinge may be used to rotatably couple the top and bottom housings of the electronic device. Electronic devices with top and bottom housings connected by at least one conventional hinge may have a closed configuration and an open configuration.

### SUMMARY

Various aspects of examples of the invention are set out in the claims.

According to a first aspect of the present invention, an apparatus comprises a first body part, a second body part and at least one hinge coupling the first body part with the second body part, the at least one hinge enabling relative rotational movement of the first body part and the second body part with respect to each other between at least one closed configuration and at least one open configuration, the apparatus having a tablet configuration such that the at least one hinge is retractable into at least one of the first body part and the second body part while in the at least one open configuration.

According to a second aspect of the present invention, an apparatus comprises a first body part having a first user interface, a second body part having a second user interface, at least one hinge coupling the first body part with the second body part, the at least one hinge enabling relative rotational movement of the first body part and the second body part with respect to each other between at least one closed configuration and at least one open configuration, the apparatus having a tablet configuration such that the hinge is retractable into at least one of the first body part and the second body part while in the at least one open configuration, at least one sensor coupled with the apparatus adapted to sense at least one position of the first body part and the second body part with respect to each other and a processor coupled with the at least one sensor configured to receive an indication of the at least one position from the at least one sensor, the processor being capable of displaying a single image on the first user interface and the second user interface when the apparatus is in the tablet configuration.

According to a third aspect of the present invention, a method, comprising receiving an indication of an apparatus configuration from a at least one sensor, determining whether the apparatus is in a tablet configuration, and displaying a single image on a first user interface and a second user interface of the apparatus when the apparatus is in the tablet configuration.

### BRIEF DESCRIPTION OF THE DRAWINGS

For a more complete understanding of example embodiments of the present invention, reference is now made to the following descriptions taken in connection with the accompanying drawings in which:

Figure 1 is a diagram of an apparatus shown in a closed configuration according to an example embodiment of the invention;

Figure 2 is a diagram of the apparatus of Figure 1 shown in an A configuration according to an example embodiment of the invention;

Figure 3 is a diagram of the apparatus of Figure 1 shown in a flat configuration according to an example embodiment of the invention;

Figure 4 is a diagram of the apparatus of Figure 1 shown in a tablet configuration according to an example embodiment of the invention;

Figure 5 is a diagram of the apparatus of Figure 1 shown in an inverted flat configuration according to an example embodiment of the invention;

Figure 6 is a block diagram of an apparatus of Figure 1 according to an example embodiment of the invention; and

Figure 7 is a flow diagram illustrating an example method for displaying images on a first and second user interface according to an example embodiment of the invention.

### DETAILED DESCRIPTON OF THE DRAWINGS

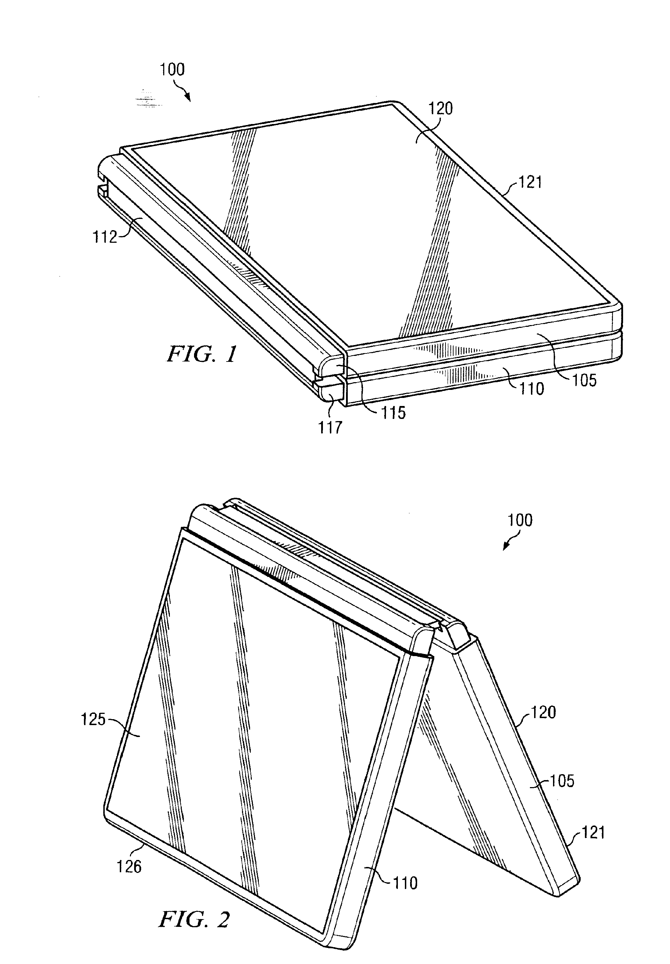

Example embodiments of the present invention and its potential advantages are understood by referring to Figures 1 through 7 of the drawings.

Figure 1 is a diagram of an apparatus 100 shown in a closed configuration according to an example embodiment of the invention. In an example embodiment, apparatus 100 is an electronic device. In an example embodiment, the electronic device includes but is not limited to a laptop computer, PDA, mobile communications device, GPS (Global Positioning Service) receiver, audio speaker and/or the like. In an embodiment, apparatus 100 comprises a first body part 105 and a second body part 110 coupled with at least one hinge such as hinge 112. In an example embodiment, the at least one hinge comprises a hinge or hinges of any type including but not limited to a pin hinge and/or the like. In an embodiment, the at least one hinge enables relative rotational movement of first body part 105 and second body part 110 with respect to each other between at least one closed configuration such as the closed configuration depicted in Figure 1 and at least one open configuration. Example open configurations of apparatus 100 will be described infra. In an example embodiment, the at least one hinge allows 360 degree rotational movement of first body part 105 and second body part 110 with respect to each other. In an example embodiment, apparatus 100 is biasable in at least one closed configuration, such as the closed configuration depicted in Figure 1. For example, apparatus 100 may be biased in at least one closed configuration using magnetic material.

In an example embodiment, apparatus 100 comprises a first hinge carrier 115 coupling first body part 105 and the at least one hinge such as hinge 112. In an example embodiment, apparatus 100 comprises a second hinge carrier 117 coupling second body part 110 and the at least one hinge such as hinge 112.

In an example embodiment, a first user interface 120 is disposed on a first surface 121 of first body part 105. In an example embodiment, first user interface 120 comprises at least one display and/or at least one touch sensitive surface and/or the like.

Figure 2 is a diagram of apparatus 100 of Figure 1 shown in an "A" configuration according to an example embodiment of the invention. In an example embodiment, an "A" configuration is an open configuration that an apparatus, such as apparatus 100, may exhibit For example, first body part 105 and second body part 110 are rotated with respect to each other to form the "A" configuration as depicted in Figure 2. In an example embodiment, a user interface such as user interface 125 is disposed on surface 126 of body part 110 and another user interface, such as user interface 120, is disposed on surface 121 of body part 105. In an example embodiment, each user interface comprises at least one display and/or at least one touch sensitive surface and/or the like. In an example embodiment, an open configuration of apparatus 100 such as the "A" configuration of Figure 2 allows a first user to view user interface 125 and a second user to view user interface 120 without each user being able to view the other user's user interface.

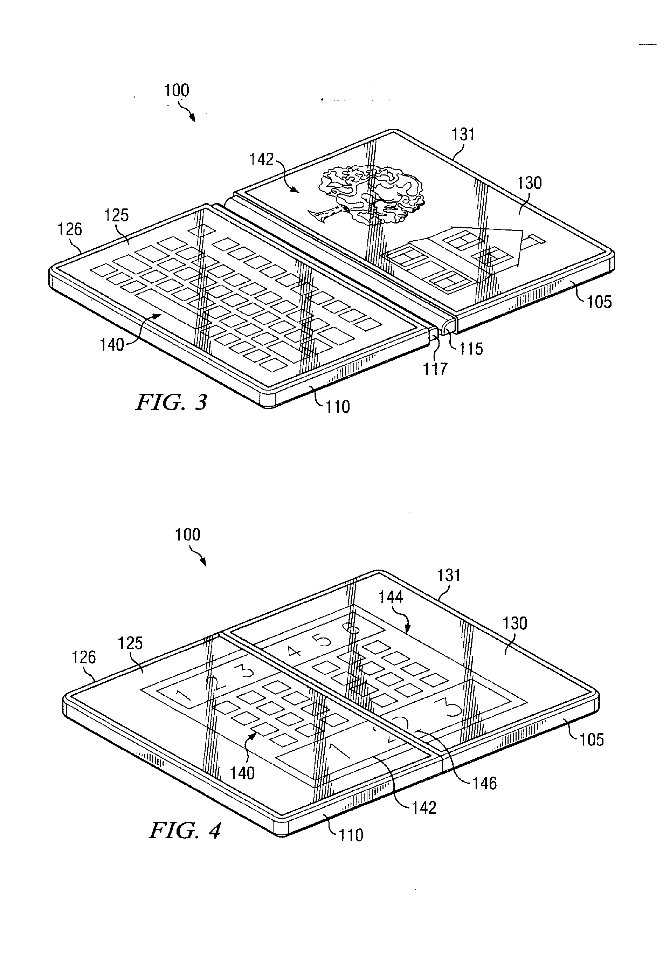

Figure 3 is a diagram of apparatus 100 of Figure 1 shown in a flat configuration according to an example embodiment of the invention. In an example embodiment, a flat configuration is a type of open configuration that an apparatus such as apparatus 100 exhibits. For example, body part 105 and body part 110 may be rotated with respect to each other to form a flat configuration such that both body parts substantially occupy a single plane as depicted in Figure 3. In an example embodiment, apparatus 100 further comprises at least one hinge carrier such as hinge carrier 115 and hinge carrier 117 7 coupling the at least one hinge such as hinge 112 of Figure 1 with body part 105 and body part 110. In an example embodiment, at least one hinge carrier is slidably coupled with at least one of a first body part and a second body part, such as body part 105 and body part 110.

In an example embodiment, a user interface such as user interface 125 is disposed on surface 126 of body part 110. In an example embodiment, another user interface such as user interface 130 is disposed on surface 131 of body part 105. In an embodiment, each user interface comprises at least one display and/or at least one touch sensitive surface and/or a keyboard and/or the like, each of which may face in substantially the same direction while apparatus 100 is in a flat configuration. For example, user interface 125 is a touch screen display and/or the like capable of displaying and receiving input from at least one virtual buttons such as virtual buttons 140. In an example embodiment, user interface 130 is a liquid crystal display (LCD) display, which may allow a user to view images, videos and/or the like such as image 142.
Figure 4 is a diagram of the apparatus 100 of Figure 1 shown in a tablet configuration according to an example embodiment of the invention. In an example embodiment, a tablet configuration is a type of open configuration that an apparatus such as apparatus 100 may exhibit. For example, body part 105 and body part 110 may be rotated with respect to each other to form a flat configuration such that both body parts substantially occupy a single plane as depicted in Figure 3. Further, while the apparatus is in a flat configuration, body part 105 and body part 110 may be brought together such that hinge carriers 115 and 117 and the at least one hinge such as hinge 112 of Figure 1 are retracted into at least one of body part 105 and body part 110 forming a tablet configuration as depicted in Figure 4. In an example embodiment, apparatus 100 is biasable in a tablet configuration. For example, apparatus 100 may be biased in a tablet configuration using magnetic material, which is not shown.

In an example embodiment, a user interface such as user interface 125 is disposed on surface 126 of body part 110 and another user interface such as user interface 130 is disposed on surface 131 of body part 105. In an example embodiment, each user interface comprises at least one display and/or at least one touch sensitive surface and/or the like, each of which may face in substantially the same direction while apparatus 100 is in a tablet configuration. In an example embodiment, when apparatus 100 is in a tablet configuration, user interface 125 and user interface 130 form a substantially continuous surface. Further, in an example embodiment, when apparatus 100 is in a tablet configuration, user interface 125 and user interface 130, which may be at least one display and/or at least one touch sensitive displays, form a combined viewable area. In an example embodiment, user interface 125 and user interface 130 form a combine viewable area, which is capable of displaying anything that is displayable on a single user interface. For example, in Figure 4, user interface 125 and user interface 130 form a combined viewable area capable of displaying a virtual calculator 144 including virtual calculator keys 140 and a handwriting detection area 142. As an alternative to using virtual calculator keys 140, for example, a user may write letters, numbers, symbols and/or the like across both user interface 125 and user interface 130 virtually seamlessly when apparatus 100 is in a tablet configuration.

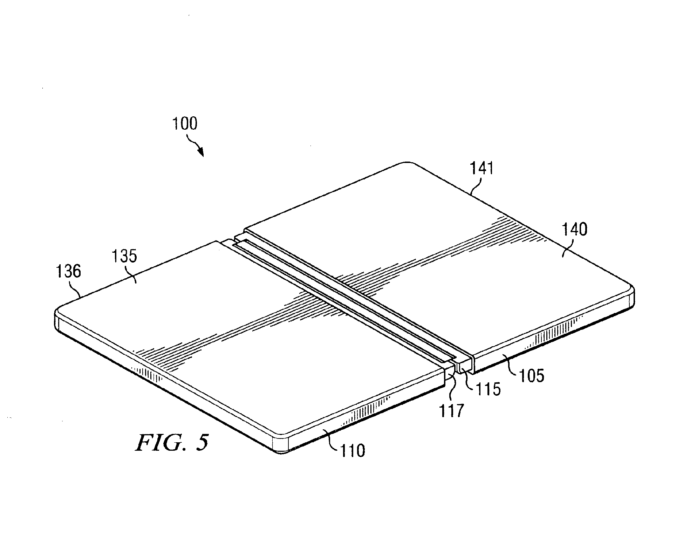

Figure 5 is a diagram of apparatus 100 of Figure 1 shown in an inverted flat configuration according to an example embodiment of the invention. For example, body part 105 and body part 110 may be rotated with respect to each other to form a flat configuration such that both body parts substantially occupy a single plane as depicted in Figure 5.

In an example embodiment, a third user interface such as user interface 135 is disposed on surface 136 of body part 110 and fourth user interface such as user interface 140 is disposed on surface 141 of body part 105. In an example embodiment, each user interface comprises at least one display and/or at least one touch sensitive surface and/or the like, each of which may face in substantially the same direction while apparatus 100 is in a flat configuration. Further, in an example embodiment third user interface 135 and fourth user interface 140 forms a substantially continuous surface when apparatus 100 is in a tablet configuration.

In an example embodiment, Figure 5 depicts apparatus 100 of Figure 3 showing the reverse sides of body parts 110 and body part 105. Further, while the apparatus is in a flat configuration, body part 105 and body part 110 may be brought together such that hinge carriers 115 and 117 and the at least one hinge such as hinge 112 of Figure 1 are retracted into at least one of body part 105 and body part 110 forming a tablet configuration as depicted in Figure 4. Further, in an example embodiment, when apparatus 100 is in a tablet configuration, user interface 135 and user interface 140, which may both be touch sensitive displays, form a combined viewable area such as apparatus 100 of Figure 4.

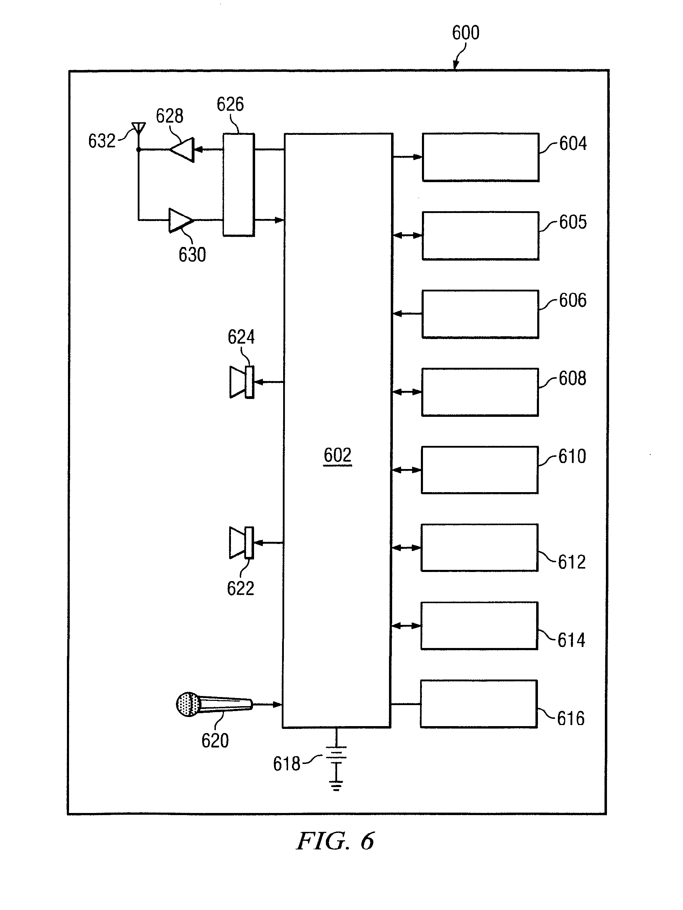

Figure 6 is a block diagram of the apparatus 100 of Figure 1 according to an example embodiment of the invention. In Figure 6, apparatus 100 comprises at least one antenna 632 to communicate with a transmitter 628 and a receiver 630. Transmitter 628 and/or receiver 630 are connected with a network interface 626 for transmitting and receiving data with electronic devices. In an example embodiment, apparatus 100 comprises at least one processor such as processor 602. In another example embodiment, processor 602 comprises at least one other processing components. Processor 602 provides at least one signal to the transmitter 628 and receives at least one signal from receiver 630. Apparatus 100 further comprises at least one user interface that includes at least one input and/or output device coupled with processor 602, such as a conventional earphone or speaker 622, a ringer 624, a microphone 620, at least one display 604, at least one touch sensitive surface 605, which may include at least one display, at least one keypad 606 and/or the like. In an example embodiment, apparatus 100 comprises at least one display and/or touch sensitive surface of any type such as but not limited to a touch screen display, and/or the like.

In an example embodiment, the apparatus 100 further comprises a battery 618 for powering various circuits to operate apparatus 100. In an embodiment, apparatus 100 comprises a location determining unit (LDU) 616. In an embodiment, location determining unit (LDU) 616 comprises a Global Positioning System (GPS) receiver for receiving a geographic location of apparatus 100.In an embodiment, apparatus 100 comprises a user identity module (UIM) 608. For example, UIM 608 may be a memory device comprising a processor. The UIM 608 may comprise, for example, a subscriber identity module (SIM), a universal integrated circuit card (UICC), a universal subscriber identity module (USIM), a removable user identity module (R-UIM), and/or the like. Further, the UIM 608 may store at least one information element related to a subscriber, such as a mobile subscriber.

The apparatus 100 further comprises at least one memory such as volatile memory 610 and/or a non-volatile memory 612. In an embodiment, volatile memory 610 comprises a cache area for the temporary storage of data. Apparatus 100 further comprises non-volatile memory 612, which may be embedded and/or removable. In an embodiment, non-volatile memory 612 further comprises an electrically erasable programmable read only memory (EEPROM), flash memory, and/or the like. In an embodiment, apparatus 100 uses memory to store at least one piece of information and/or data to implement one or more features of apparatus 100. Further, in an embodiment, the memory further comprises an identifier, such as international mobile equipment identification (IMEI) code, capable of uniquely identifying apparatus 100. For example, the processor 602, using the stored instructions, may determine an identity, e.g., using cell identification information. LDU 616 may use cell identification information to determine a geographic location for apparatus 100.

In an embodiment, processor 602 of apparatus 100 comprises circuitry for implementing audio features, logic features, and/or the like. In an embodiment, the processor 602 comprises a digital signal processor device, a microprocessor device, a digital to analog converter, other support circuits, and/or the like. Further, in an embodiment, the processor 602 comprises features to operate one or more software programs. For example, the processor 602 may be capable of operating a software program for connectivity, such as a conventional Internet browser. Further, the connectivity program may allow the apparatus 100 to transmit and receive Internet content, such as email messages, text messages, SMS messages, MMS messages, location-based content, web page content, and/or the like. Further, processor 602 is capable of executing a software program for operating apparatus 100 such as operating at least one display 604 and/or at least one touch sensitive surface 605.

In an example embodiment, the apparatus 100 is capable of operating in accordance with any of a number of a first generation communication protocol, a second generation communication protocol, a third generation communication protocol, a fourth generation communication protocol, and/or the like. For example, the apparatus 100 may be capable of operating in accordance with second generation (2G) communication protocols IS-136, time division multiple access (TDMA), global system for mobile communication (GSM), IS-95 code division multiple access (CDMA), and/or the like. Further, the apparatus 100 may be capable of operating in accordance with third-generation (3G) communication protocols, such as Universal Mobile Telecommunications System (UMTS), CDMA2000, wideband CDMA (WCDMA), time division-synchronous CDMA (TD-SCDMA), and/or the like. Further, the apparatus 100 may also be capable of operating in accordance with 3.9 generation (3.9G) wireless communication protocols, such as Evolved Universal Terrestrial Radio Access Network (E-UTRAN) and/or the like, or wireless communication projects, such as long term evolution (LTE) and/or the like. Further, the apparatus 100 may be capable of operating in accordance with fourth generation (4G) communication protocols.

In an example embodiment, apparatus 100 is capable of operating in accordance with a non-cellular communication mechanism. For example, apparatus 100 may be capable of communication using at least one communication technique such as WLAN, Bluetooth ™, RFID, Infrared and/or the like. For example, the apparatus 100 may communicate using one or more of the following WLAN techniques: IEEE 802.11, e.g., 802.11a, 802.11b, 802.11g, 802.1 In, and/or the like.

In an embodiment, apparatus 100 comprises at least one sensor such as sensor 614 coupled with processor 102 is capable of sensing at least one position of a body part of apparatus 100 such as body part 105 of Figure 3 and body part 110 of Figure 3 with respect to each other. At least one sensor such as sensor 614 may be of any type including but not limited to an infrared sensor or magnetic sensor. In an embodiment, at least one sensor such as sensor 614 is able to determine the configuration of apparatus in at least one of an open configuration, a closed configuration, a flat configuration, a tablet configuration and/or the like. In an example embodiment, processor 102 is capable of receiving an indication of at least one position of at least one body part of an apparatus such as body part 105 of Figure 3 and body part 110 of Figure 3 from at least one sensor such as sensor 614. In an example embodiment, processor 602 is capable of displaying a single image on at least one user interface of apparatus 100 such as user interface 125 of Figure 4 and/or user interface 130 of Figure 4 when the apparatus is in a tablet position. In an example embodiment, processor 602 is capable of displaying separate images on a first user interface and a second user interface of apparatus 100 when apparatus 100 is not in a tablet configuration.

Apparatus 100 may be any electronic device including but not limited to a mobile phone, portable digital assistant (PDA), a pager, a mobile television, a gaming device, a camera, a video recorder, an audio player, a video player, a television, a radio, a computer, a portable computer, a GPS device, a GPS navigation device, a GPS system, a browsing device, an electronic book reader and/or the like or any combination thereof

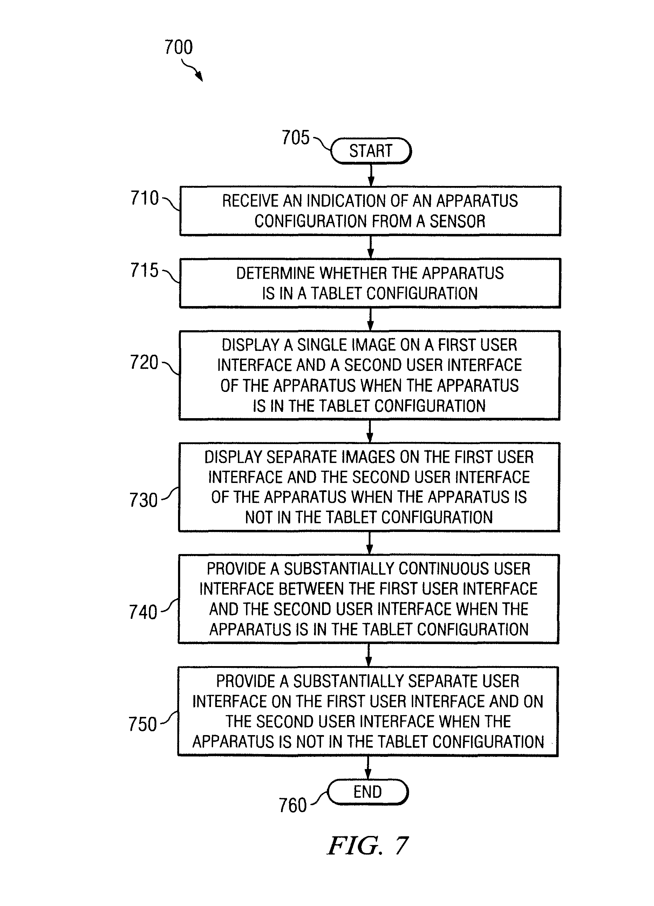

Figure 7 is a flow diagram illustrating an example method for displaying images on a first and second user interface according to an example embodiment of the invention. At 705, the example method begins. At 710, an indication of an apparatus configuration is received from at least one sensor. In an example embodiment, an indication of an apparatus configuration such as but not limited to an open configuration, a closed configuration, a flat configuration, a tablet configuration and/or the like is received by a processor such as processor 602 of Figure 6 from at least one sensor such as sensor 614 of Figure 6. At 715, a determination is made whether an apparatus such as apparatus 100 of Figure 6 is in a tablet configuration. In an example embodiment, a processor such as process 602 determines whether an apparatus is in a tablet configuration by considering at least one indication received by at least one sensor such as sensor 614.

At 720, a single image is displayed on a first user interface and a second user interface of an apparatus when the apparatus is in a tablet configuration. In an example embodiment, a processor such as processor 602 of Figure 6 displays a single image using both a first and second user interface such first user interface 125 of Figure 4 and second user interface 130 of Figure 4 when the apparatus is in a tablet configuration. For example, as depicted in Figure 4, an image of an electronic calculator may be displayed as a single image on both first user interface 125 and second user interface 130.

At 730, when the apparatus is not in a tablet configuration, separate images are displayed on a first user interface and a second user interface such as user interface 125 and user interface 130 both of Figure 4. For example, as in Figure 3, a virtual keyboard is displayed on user interface 126 and separate image is displayed on user interface 130 while the apparatus is in not in a tablet configuration.

At 740, a substantially continuous user interface is provided between a first user interface and a second user interface when an apparatus is in a tablet configuration. For example, while apparatus 100 of Figure 4 is in a tablet configuration, a user may write letters, numbers, symbols and/or the like on a first user interface, a second user interface and/or across a first and second user interface of the apparatus. For example, in Figure 4, the number "2" 146 is written across first user interface 125 and second user interface 130 of apparatus 100. A processor such as processor 602 of Figure 6 may be configured to provide a continuous user interface by interpreting user input, which spans across multiple user interfaces such as user interfaces 125 and 130 of Figure 4 when an apparatus such as apparatus 100 is in a tablet configuration.

At 750, substantially separate user interfaces are provided on first and second user interfaces when the apparatus is not in a tablet configuration. For example, while an apparatus such as apparatus 100 of Figure 3 is not in a tablet configuration, a user may write letters, numbers, symbols and/or the like on a first and/or second user interface such as first and second user interfaces 125 and 130 of Figure 3, but not across the first and second user interfaces. In an example embodiment, processor such as processor 602 of Figure 6 is configured to provide substantially separate user interfaces by interpreting user input separately on multiple user interfaces such as user interfaces 125 and 130 of Figure 3. At 760, the example method ends.

Without in any way limiting the scope, interpretation, or application of the claims appearing below, a technical effect of one or more of the example embodiments disclosed herein is to provide an apparatus in tablet configuration without exposing any hinges. Another technical effect of one or more of the example embodiments disclosed herein is to provide a substantially continuous user interface across multiple body parts of an apparatus when an apparatus is in a tablet configuration.

Embodiments of the present invention may be implemented in software, hardware, application logic or a combination of software, hardware and application logic. The software, application logic and/or hardware may reside on an electronic device such as but not limited to a mobile communications device. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted in Figure 6. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. An apparatus comprising:
a first body part;
a second body part; and
at least one hinge coupling said first body part with said second body part, said at least one hinge enabling relative rotational movement of said first body part and said second body part with respect to each other between at least one closed configuration and at least one open configuration,
said apparatus having a tablet configuration such that said at least one hinge is retractable into at least one of said first body part and said second body part while in said at least one open configuration.

2. An apparatus according to claim 1, further comprising a first user interface disposed on a first surface of said first body part and a second user interface disposed on a first surface of said second body part, wherein said first user interface and said second user interface face in substantially the same direction when said apparatus is in said tablet configuration.

3. An apparatus according to claim 2, wherein said first user interface and said second user interface form a substantially continuous surface when said apparatus is in said tablet configuration.

4. An apparatus according to claims 2 or 3, wherein said first user interface and said second user interface form a combined viewable area when said apparatus is in said tablet configuration.

5. An apparatus according to claims 2-4, wherein said first user interface and said second user interface comprise at least one of a display and a touch sensitive surface.

6. An apparatus according to claim 2-5, further comprising a third user interface disposed on a second surface of said first body part and a fourth user interface disposed on a second surface of said second body part, wherein said third user interface and said fourth user interface face in substantially the same direction when said apparatus is in said tablet configuration.

7. An apparatus according to claim 6, wherein said third user interface and said fourth user interface form a combined viewable area when said apparatus is in said tablet configuration.

8. An apparatus according to claim 6 or 7, wherein said third user interface and said fourth user interface form a substantially continuous surface when said apparatus is in said tablet configuration.

9. An apparatus according to claim 1, further comprising at least one hinge carrier coupling said hinge with said first body part and said second body part.

10. An apparatus according to claim 9, wherein said hinge carrier is slidably coupled with at least one of said first body part and said second body part.

11. An apparatus according to claims 1-10, wherein said apparatus is biasable in said tablet configuration.

12. An apparatus according to claims 1-11, wherein said apparatus is biasable in said at least one closed configuration.

13. An apparatus comprising:
a first body part having a first user interface;
a second body part having a second user interface;
at least one hinge coupling said first body part with said second body part, said at least one hinge enabling relative rotational movement of said first body part and said second body part with respect to each other between at least one closed configuration and at least one open configuration, said apparatus having a tablet configuration such that said hinge is retractable into at least one of said first body part and said second body part while in said at least one open configuration;
at least one sensor coupled with said apparatus adapted to sense at least one position of said first body part and said second body part with respect to each other;
a processor coupled with said at least one sensor configured to receive an indication of said at least one position from said at least one sensor, said processor being capable of displaying a single image on said first user interface and said second user interface when said apparatus is in said tablet configuration.

14. A method, comprising:
receiving an indication of an apparatus configuration from at least one sensor;
determining whether said apparatus is in a tablet configuration; and
displaying a single image on a first user interface and a second user interface of said apparatus when said apparatus is in the tablet configuration.

15. A method according to claim 14, further comprising displaying separate images on said first user interface and said second user interface of said apparatus when said apparatus is not in said tablet configuration.
